(19) Europäisches Patentamt
European Patent Office
Office européen des brevets

(11) **EP 3 625 292 B1**

(12) **EUROPEAN PATENT SPECIFICATION**

(45) Date of publication and mention
of the grant of the patent:
**06.07.2022 Bulletin 2022/27**

(21) Application number: **18772826.6**

(22) Date of filing: **26.09.2018**

(51) International Patent Classification (IPC):
**C08L 67/04** (2006.01)

(52) Cooperative Patent Classification (CPC):
(C-Sets available)
**C08L 67/04** (Cont.)

(86) International application number:
**PCT/EP2018/076122**

(87) International publication number:
**WO 2019/063609 (04.04.2019 Gazette 2019/14)**

(54) **METHOD OF PREPARING A PHYSICALLY CROSS-LINKED, LACTIDE-BASED POLYMER SYSTEM, POLYMER SYSTEM PREPARED BY THE METHOD, AND PROCESS OF MANUFACTURING AN OBJECT FROM THE POLYMER SYSTEM**

VERFAHREN ZUR HERSTELLUNG EINES PHYSIKALISCH VERNETZTEN, LACTIDBASIERTEN POLYMERSYSTEMS, DURCH DAS VERFAHREN HERGESTELLTES POLYMERSYSTEM UND VERFAHREN ZUR HERSTELLUNG EINES OBJEKTS AUS DEM POLYMERSYSTEM

PROCÉDÉ DE PRÉPARATION D'UN SYSTÈME POLYMÈRE PHYSIQUEMENT RÉTICULÉ À BASE DE LACTIDE, SYSTÈME POLYMÈRE PRÉPARÉ PAR LE PROCÉDÉ ET PROCÉDÉ DE FABRICATION D'UN OBJET À PARTIR DU SYSTÈME POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 EP 17193889**

(43) Date of publication of application:
**25.03.2020 Bulletin 2020/13**

(73) Proprietor: **Helmholtz-Zentrum hereon GmbH**
**21502 Geesthacht (DE)**

(72) Inventors:
• **LENDLEIN, Andreas**
**14167 Berlin (DE)**
• **KRATZ, Karl**
**14165 Berlin (DE)**

• **ZHANG, Quanchao**
**Jiangxi 330038 (CN)**

(74) Representative: **Gulde & Partner**
**Patent- und Rechtsanwaltskanzlei mbB**
**Wallstraße 58/59**
**10179 Berlin (DE)**

(56) References cited:
**US-A1- 2016 130 435    US-A1- 2017 072 089**

(52) Cooperative Patent Classification (CPC): (Cont.)

C-Sets
**C08L 67/04, C08L 67/04**

## Description

The work leading to this invention has received funding from the European Union Seventh Framework Programme FP7/2007-2013 under Grant Agreement n° 604049.

The invention is related to a method of preparing a physically cross-linked, lactide-based, biodegradable and biocompatible polymer system (blend) having a high shape stability after mechanical deformation and high elasticity. The polymer system obtained by the method can be processed from the melt, for instance with extrusion, injection molding, hot pressing, or 3D-printing.

Apart from covalent net points (cross-links) such as in rubbers also polymeric networks having non-covalent net points (cross-links) may exhibit hyperelastic behavior. In semi-crystalline polymers for instance, crystallites may serve as temporary net points. An example for biologically degradable plastics with crystalline net points from renewable resources are polylactide-based materials, which can be processed to molded bodies from the melt (by extrusion, injection molding, or 3D-printing) or from the solution (by spinning, casting, electrospinning). Polylactide has a glass transition ($T_g$) in the range of 45 to 60 °C and may form crystallites having a melting point ($T_m$) in the range of 140 to 175 °C. The crystallization velocity however is very low, usually requiring a thermal posttreatment (tempering) in order to obtain a sufficient number of crystallites. The formation of crystallites in polylactide-based materials can further be promoted by crystallization seeds. In this regards, stereocomplexes between poly(D-lactide) (PDLA) and poly(L-lactide) (PLLA) have been applied. The crystallites of these stereocomplexes have a melting point in the range of 200 to 230 °C. A commonly applied approach for preparing polylactide-based materials comprising stereocomplexes is the preparation of blends (mixtures) of PLLA and PDLA. For the preparation of these PLLA/PDLA mixtures predominantly solvent-based processes are applied. In addition, methods of preparing the blends from the melt are also described.

Besides from pure blends of PLLA and PDLA also ε-caprolactone-containing copolymers and their mixtures comprising stereocomplexes are described, which are prepared by solvent-based processes:

1) Blends of triblock-copolymers having a central poly[(ε-caprolactone)-co-(δ-valerolactone)] block and terminal PDLA- or PLLA-sequences (PLLA-PCVL-PLLA orPDLA-PCVL-PDLA). These blends are obtained as evaporation films from chloroform solutions [ACS Sustainable Chem. Eng. 2016, 4, 121-128].

2) Triblock-copolymers consisting of a central statistical poly[(D,L-lactide)-co (ε-caprolactone)] and terminal PDLA- or PLLA-blocks (PLLA-block-P(DLLA-stat-CL)-block-PLLA). Stereocomplex-films of these triblock-copolymers were prepared from chloroform solutions [Journal of Polymer Science, part A: Polymer Chemistry 2015, 53, 489-495].

3) Blends of PLLA and P(DLA-co-CL)-copolymers were processed to stereocomplex-films from methylene chloride solutions [Journal of Polymer Science, part A: Polymer Chemistry 2005, 43, 438-454].

After preparation of the blends typically a thermal post processing treatment (tempering) is conducted in order to obtain crystallites in sufficient number. Typically, the tempering is performed in a temperature range of 60 to 120 °C.

US 2016/130435 A1 discloses a method of preparing as thermoplastic resin composition, wherein a poly[{(D-lactide)-*ran*-(ε-caprolactone)}-*block*-{(D-lactide)}] copolymer is dry blended with poly(L-lactide) homopolymer and epoxidized soybean oil to obtain a blend. Then, an extrudate is obtained by performing melt compounding in a twin-screw extruder, and the extrudate is dried to form a resin composition.

US 2017/0072089 A1 discloses to manufacture a viscoelastic sheet by preparing a homogenous polymer solution comprising 30 wt-% of poly[(DL-lactide)-co-(ε-caprolactone)] and 1 wt-% of poly[(L-lactide)-co-(ε-caprolactone)] dissolved in a mixture of DMF, dioxane and THF. This solution is processed by electro spinning to obtain the viscoelastic sheet.

## BRIEF DESCRIPTION OF THE INVENTION

Accordingly, there is a demand for an environmentally friendly and sustainable preparation method for a highly-elastic, lactide-based polymer system that can be conducted in an easy and cost efficient manner.

This problem is at least partly solved by a method of preparing a non-covalently (physically) cross-linked polymer system, a non-covalently cross-linked polymer system obtained or obtainable by the method, and a process of manufacturing an object from the non-covalently cross-linked polymer system according to the independent claims. Preferred embodiments are defined in the dependent claims and the following description.

The method of preparing a non-covalently (physically) cross-linked polymer system according to the invention comprises the steps of:

preparing a melt of a copolymer based on a first comonomer and at least one second comonomer, the first comonomer being selected from L-lactide and D-lactide; and
adding a lactide-containing stereocomplex forming agent to the melt, wherein the stereocomplex forming agent is selected such that the resulting polymer system comprises a combination of constitution units derived from L-lactide and constitution units derived from D-lactide forming stereocomplexes.

According to the invention the stereocomplex forming agent is added to the melt of the lactide-containing copolymer during its thermoplastic processing to the blend. In this way, the stereocomplexes are spontaneously and readily formed in high amount. Thus, a thermal post processing treatment required in the prior art methods may be omitted using the method of the invention. Accordingly, the method of the invention can be conducted in an energy and time saving manner.

The copolymer comprises D-lactide (DLA) or L-lactide (LLA) as the first comonomer. Apart from this, the copolymer comprise one or more second comonomers.

The stereocomplex forming agent is capable of forming stereocomplexes with the L-lactide or D-lactide of the copolymer. For this reason, the stereocomplex forming agent itself contains lactide, i.e. D-lactide (DLA) or L-lactide (LLA), where the lactide of the stereocomplex forming agent is the complementary lactide to that of the copolymer. In other words, if the copolymer contains DLA as the first monomer, the stereocomplex forming agent is selected to contain LLA. If the copolymer contains LLA, the stereocomplex forming agent is selected to contain DLA. Thus, the resulting blend comprises both stereoisomers of lactide. In this way, the resulting blend contains a combination of DLA and LLA and therefore crystalline LLA/DLAstereocomplexes are formed in the blend acting as non-covalent net points between the copolymer and the stereocomplex forming agent. The LLA/DLA-stereocomplexes are formed in the melt and/or after solidification.

In the present description, expressions such as "copolymer/agent based on a comonomer" or "copolymer/agent comprising a comonomer" is to be understood as referring to a copolymer that is build up of constitution units that comprise the comonomer or that are derived from the copolymer by polymerization.

The invention allows the formation of stereocomplexes from the solvent-free melt. Therefore, according to preferred embodiments the melt is substantially free of organic solvents. Even more preferably the melt is substantially free of any solvent (including inorganic solvents and water). In other words, preferably no solvent is added to the melt nor to the components added to the melt. This preferably applies for the complete method. Here, the expression "substantially free of (organic) solvents" refers to a total content of (organic) solvents in melt of at most 0.5 wt%, preferably at most 0.2 wt%, even more preferably of at most 0.1 wt%. These minor amounts may be due to unavoidable solvent residues in the ingredients used in the method.

In addition, the synthesis of the educts (copolymer and stereocomplex forming agent) is preferably conducted in a solvent-free manner as well.

Also the processing of the blend to form a molded article can be accomplished in the absence of solvents, for example using a thermoplastic process, such as extrusion, injection molding, spinning, hot pressing, 3D-printing and the like.

Due to the absence of solvents, the method of the invention is ecofriendly, sustainable and also cost effective.

In preferred embodiments the melt is prepared by a thermoplastic process, i.e. by a process comprising applying thermal energy (heating) and mechanical energy (shearing, e.g. kneading) to the copolymer and the formed blend. The thermoplastic process may comprise a kneading and heating process. Preferably the melt is prepared in an extruder, particularly in a twin-screw extruder. That is, while the copolymer is kneaded and heated in the extruder the stereocomplex forming agent is added and hence mixed with the melted copolymer within the extruder. The preparation of the melt in an extruder also allows to mold an object from the blend by directly extruding or injection molding the blend using the extruder.

Another aspect of the invention relates to a non-covalently cross-linked polymer system obtained or obtainable by the method of the invention.

The polymer system is a blend of the copolymer and the stereocomplex forming agent being physically (non-covalently) cross-linked via the crystallites formed by the LLA/DLAstereocomplexes. The polymer system obtained by the method contains a high total crystallinity with a high content of stereocomplexes allowing to surrender a subsequent tempering at 60 to 120 °C which is required by known preparation methods in order to increase the amount of stereocomplexes. Due to the high amount of stereocomplexes acting as non-covalent (physically) cross-linking crystallites the resulting product is highly elastic and has a high shape stability. The obtained lactide-based polymer system is biodegradable and biocompatible.

Yet another aspect of the invention is related to a process of manufacturing an object from the non-covalently cross-linked polymer system using a thermoplastic process.

Preferred thermoplastic processes comprise extrusion, injection molding, spinning, electrospinning, hot pressing, 3D-printing, and the like.

In addition the polymer system allows a re-molding of the object by subjecting the object manufactured from the blend to a further thermoplastic process.

The temperature applied for the thermoplastic process may be below, within or above the melting temperature range of the stereocomplexes, preferably within or above the melting temperature. The obtained structures, finished or semi-finished products and components contain a high content of stereocomplexes and thus have a highly elastic behavior and high shape stability.

Further embodiments of the invention are subject of the dependent claims.

In the absence of an indication to the contrary, the various embodiments of the invention disclosed in the present claims, description or figures may be combined with each other.

DETAILED DESCRIPTION OF THE INVENTION

The invention will be described in more detail by way of examples. The figures show:

Figure 1    a system for preparing a polymer system (here P(LLA-co-CL)/PDLA), (a) feeding the extruder with copolymer, (b) adding stereocomplex forming agent, (c) extruding a filament;

Figure 2    DSC plots (a) and WAXS diffraction of (b) of the copolymer P(LLA-co-CL) (broken lines) and the blend P(LLA-co-CL)/PDLA (continuous lines);

Figure 3    WAXS diffraction pattern of a granulate from the blend P(LLA-co-CL)/PDLA (broken line) and a P(LLA-co-CL)/PDLA-film obtained from the granulate by hot pressing (continuous line);

Figure 4    three exemplary stress/strain diagrams of test pieces made from the P(LLA-co-CL)/PDLA-films;

Figure 5    manual relaxation experiments of test pieces made from the P(LLA-co-CL)/PDLA-films; and

Figure 6    cyclic relaxation experiments of test pieces made from the P(LLA-co-CL)/PDLA-films.

*Method of preparing the polymer system*

The invention provides an environmental friendly and sustainable method of preparing a physically cross-linked polymer system (also referred to as blend). The method comprises the steps of:

> preparing a melt of a copolymer (A) based on a first comonomer and at least one second comonomer, the first comonomer being selected from L-lactide and D-lactide; and
> adding a lactide-containing stereocomplex forming agent (B) to the melt, wherein the stereocomplex forming agent is selected such that the resulting polymer system comprises a combination of constitution units derived from L-lactide and constitution units derived from D-lactide forming stereocomplexes.

Accordingly, the method comprises a first step involving the preparation of a melt of the copolymer and a second step of adding a lactide-containing stereocomplex forming agent (B) to the melt thus, forming stereocomplexes between lactide sequences in the copolymer (A) and the complementary stereoisomers in the stereocomplex forming agent (B).

The preparation of the melt is preferably conducted using a thermoplastic process, in which thermal and mechanical energy is supplied to the copolymer. For example, the copolymer may be heated and kneaded in order to apply shear forces such as to cause melting of the copolymer. The melting process may be conducted in a heatable extruder, such as a twin-screw extruder.

Preferably, no solvent is added to melt, that is the melt is substantially free of any solvent.

The stereocomplex forming agent (B) is added to the melt preferably during the thermoplastic processing of the copolymer. Preferably, the agent (B) is added to the melted copolymer directly into the extruder. In this process, the stereocomplex forming agent (B) is melted and intensively mixed with the copolymer (A).

The temperature applied during the thermoplastic process of both steps is above the melting temperature of the copolymer in order to hold it in a molten state. The temperature is further selected such that the LLA/DLA stereocomplexes formed between components (A) and (B) do not form. i.e. it depends on the melting temperature of the LLA/DLA stereocomplexes. Nevertheless, the temperature during the process may be below, within or above the melting temperature range of the stereocomplexes. When it is below the melting temperature range of the stereocomplexes, it is believed that the combination of temperature and mechanical shearing energy introduced into the mixture inhibits the formation of stereocomplexes, even below the nominal melting temperature of the LLA/DLA stereocomplexes.

Preferably, no thermal post-treatment process is applied to the polymer system to enhance formation of the stereocomplexes. On contrary, the stereocomplexes are directly formed after the polymer system is allowed to cool to room temperature.

*Copolymer (A)*

The copolymer (A) comprises a first comonomer and at least one second copolymer. The first comonomer is selected from L-lactide (LLA) and D-lactide (DLA). The at least one second comonomer is different from the first comonomer and excludes lactide (LLA, DLA). The second comonomer may be selected from aliphatic cyclic esters (for instance, $\varepsilon$-caprolactone, $\omega$-pentadecalactone, $\gamma$-butyrolactone, $\beta$-butyrolactone, $\delta$-valerolactone, $\delta$-decalactone, $\gamma$-decalactone or $\varepsilon$-decalactone), aliphatic cyclic di-esters (for instance, diglycolide or mesodilactide), aliphatic cyclic ether esters (for instance, *p*-dioxane-2-one), aliphatic cyclic amides (for instance,. $\beta$-propiolactam, $\gamma$-butyrolactam, $\delta$-valerolactam, and $\varepsilon$-caprolactam) or cyclic morpholine-diones (for instance, 3(S)-iso-butyl-morpholine-2,5-dione, 3(S)-sec-butyl-morpholine-2,5-dione and 3(S)-metyl-morpholine-2,5-dione). In preferred embodiments the second comonomer comprises $\varepsilon$-caprolactone (CL).

Preferably the copolymer(A) is a dicopolymer of units derived from ε-caprolactone (CL) and units derived either from L-lactide (LLA) or from D-lactide (DLA).

In embodiments, the copolymer (A) has a weight average molecular weight $M_w$ of at least 80 kDa, preferably of at least 100 kDa. A high molecular weight of $\geq$ 80 kDa enhances the elasticity of the material by increasing the entanglement of the polymer chains. The upper value of the molecular weight of the copolymer is not particularly limited in terms of material properties. However, it may be difficult to achieve molecular weights $M_w$ of more than 300 kDa by standard synthesis methods of the copolymer. The weight average molecular weight $M_w$ can be measured by universally calibrated gel permeation chromatography (GPC).

The copolymer (A) preferably has a substantially random, partially blocky structure. The term "partially blocky" means that the copolymer comprises some block sequences of oligo(L-lactide) or oligo(D-lactide), respectively. The block sequences of oligo(L-lactide) or oligo(D-lactide) in the copolymer enhance the formation of stereocomplexes with the corresponding complementary sequences, i.e. oligo(D-lactide) or oligo(L-lactide), of the stereocomplex forming agent. More precisely, when the copolymer (A) is, for example, poly[(L-lactide)-co-(ε-aprolactone)] its oligo(L-lactide) sequences will form stereocomplexes with oligo(D-lactide) sequences of the stereocomplex forming agent (B). When the copolymer (A) is, for example, poly[(D-lactide)-co-(ε-caprolactone)] its oligo(D-lactide) sequences will form stereocomplexes with oligo(L-lactide) sequences of the stereocomplex forming agent (B).

The weight content of the first comonomer (lactide) in the copolymer (A) may be in the range of 53 to 75 wt%, particularly in the range of 56 to 67 wt%, preferably in the range of 60 to 64 wt%, based on the total weight of the copolymer (A) (100 wt%). When the weight content of lactide in the copolymer (A) is more than 75 wt%, the glass temperature $T_g$ of the copolymer will increase with the effect that the material at room temperature is in the glass state, i.e. that the material is not elastic. If however the weight content of lactide in the copolymer (A) is less than 53 wt%, the formation of the oligo-lactide blocks during the synthesis may be hindered resulting in low formation of crystallites in the polymer blend.

Accordingly, the weight content of the at least one second comonomer such as ε-caprolactone in the copolymer (A) may be in the range of 25 to 47 wt%, particularly in the range of 33 to 44 wt%, preferably in the range of 36 to 40 wt%, based on the total weight of the copolymer (A) (100 wt%).

The weight contents of the first and second comonomer in the copolymer (A) determines the glass temperature $T_g$ of the copolymer (and hence of the polymer blend) and, on the other hand, influences the partial formation of blocks of oligo-LLA or oligo-DLA in the copolymer. In copolymers comprising comonomers that can be ideally mixed with each another, such as in the case of lactide (LA) and ε-caprolactone (CL), the theoretical glass transition temperature $T_{g,t}$ can be calculated by the Fox-Equation below, where $w_1$ and $w_2$ are the weight fractions of the first comonomer and the second comonomer and $T_{g_1}$ and $T_{g_2}$ are the glass transition temperatures of the corresponding homopolymers of the first and second comonomer, respectively:

$$\frac{1}{T_{g,t}} = \frac{w_1}{T_{g_1}} + \frac{w_2}{T_{g_2}}$$

In the present invention, a glass transition temperature $T_g$ of the polymer blend of $\leq$ 0 °C is preferred in order to obtain a material that exists in its elastic state at room temperature. According to the above Fox-Equation with $T_{g,PCL}$ = -60 °C and $T_{g,PLA}$ = 50 °C a theoretical weight ratio of $\leq$ 65 wt% of LA (LLA or DLA) and $\geq$ 35 wt% of CL results to obtain the desired $T_g$ of the copolymer. However, the true glass transition temperature $T_g$ of a real copolymer is influenced by two factors. First, it has to be considered that during the synthesis of the copolymer by copolymerisation of the two comonomers, not necessarily all comonomers may be incorporated into the polymer chain resulting in a deviation of the fractions of the comonomers in the obtained copolymer from the fraction of the comonomers used in the synthesis mixture. In addition, crystallized segments in the polymer chain do not contribute to the $T_g$. Accordingly, differential scanning calorimetry (DSC) and nuclear magnetic resonance (NMR) experiments were made in order to determine the comonomer fractions of CL and LA in the copolymer necessary for achieving the desired $T_g$.

As mentioned before, the copolymer (A) preferably has a partially blocky structure. The degree of block segments in copolymers can be expressed by the average dyad ratio. The dyad ratio is the molar ratio of the number of homodimers of the same comonomer type present in the polymer chain (comonomer 1-comonomer 1) to a heterodimer formed by two different comonomers (comonomer 1-comonomer2). The dyad ratio can be determined by $^1$H-NMR. In the present invention, the copolymer (A) preferably has a dyad ratio of lactide-lactide dyads (LA-LA) to lactide-comonomer 2 dyads of at least 2.5:1. When the dyad ratio is less than 2.5:1 the occurrence of blocks of oligolactide in the copolymer becomes low so that the formation of stereocomplexes in the polymer blend also becomes low.

The function of the second comonomer such as ε-caprolactone in the copolymer is to form an amorphous phase at the desired temperature of use, particularly at room temperature. For this purpose, a molar content of the second comonomer present in an amorphous phase in the first polymer component (A) is at least 25 mol%, preferably in the range of 27-33 mol%, based on the total molar amount of the second comonomer in the first polymer component (A).

The copolymer (A) can be synthesised by copolymerising a mixture of the first comonomer (i.e. L,L-dilactide or D,D-dilactide) and the second comonomer such as $\varepsilon$-caprolactone in the desired mixing ratio through ring opening copolymerisation.

*Stereocomplex forming agent (B)*

The function of the stereocomplex forming agent (B) is to form stereocomplexes with the LLA or DLA sequences of the copolymer (A) in order to induce elasticity. For this purpose the agent (B) comprises lactide units which are the complemental stereoisomers of the lactide contained in the copolymer (A).

According to preferred embodiments of the invention, the stereocomplex forming agent (B) is a homopolymer of lactide or a copolymer of lactide and a at least one second comonomer. The second comonomer may be selected from those mentioned above with respect to the comonomers of copolymer. In preferred embodiments the second comonomer is $\varepsilon$-caprolactone. In specific examples, the agent (B) may be selected from poly(L-lactide) (PLLA), poly(D-lactide) (PDLA), poly[(L-lactide)-*co*-($\varepsilon$-caprolactone)] (P(LLA-co-CL)) and poly[(D-lactide)-*co*-($\varepsilon$-caprolactone)] P(DLA-co-CL).

In case the stereocomplex forming agent (B) is PLLA or PDLA, its weight average molecular weight $M_w$ is preferably in the range of 1 to 40 kDa, more preferably of 2 to 20 kDa. By providing a molecular weight of the agent (B) of below 40 kDa, its mobility within the blend is increased. As the corresponding oligo-LLA or oligo-DLA segments of the agent (B) in a blend with the copolymer (A) give rise to formation of stereocomplexes that serve as nucleation sites for the formation of crystallites, the increased mobility leads to a higher velocity of the formation of crystallites and faster propagation of crystallization. On the other hand, by providing a molecular weight of the agent (B) of above 1 kDa, the size and hence the stability of the stereocomplexes are increased.

The stereocomplex forming agent (B) can be synthesised by homopolymerising the monomers L,L-dilactide or D,D-dilactide, respectively through ring opening polymerisation. In case the stereocomplex forming agent (B) is selected from poly[(L-lactide)-*co*-($\varepsilon$-caprolactone)] or poly[(D-lactide)-*co*-($\varepsilon$-caprolactone)], its synthesis can be done in the same way as described for the copolymer (A).

Regarding the further properties of the P(LLA-co-CL) or P(DLA-co-CL) when used as the stereocomplex forming agent (B) the same consideration as set forth with respect of the first component (A) apply.

*Polymer system (blend)*

Preferably, the polymer blend obtained by the method of the invention is a binary composition only comprising the two polymers selected from the copolymer (A) and the stereocomplex forming agent (B).

In embodiments of the invention, the stereocomplex forming agent (B) is selected from poly(L-lactide) and poly(D-lactide). In this case the polymer blend preferably comprises or consists of 80 to 99 wt% of the copolymer (A) and 1 to 20 wt% of the stereocomplex forming agent (B). More preferably the polymer blend comprises or consists of 85 to 97 wt% of the copolymer (A) and 3 to 15 wt% of the stereocomplex forming agent (B). Even more preferably, the polymer blend comprises or consists of 90 to 95 wt% of the copolymer (A) and 5 to 10 wt% of the stereocomplex forming agent (B). By adjusting the mixing ratio of components (A) and (B) the mechanical properties of the material can be adjusted according to a desired appliance. Moreover, when the content of the stereocomplex forming agent (B) in the blend is more than 20 wt% the material becomes brittle. Furthermore, if the stereocomplex forming agent (B) is below 1 wt% and above 20 wt% the elongation at break decreases. Accordingly, a weight content of the stereocomplex forming agent (B) in the range of 1 to 20 wt%, particularly of about 10 wt%, imparts the highest values of elongation at break.

In other embodiments of the invention, the stereocomplex forming agent (B) is selected from poly[(L-lactide)-*co*-($\varepsilon$-caprolactone)] and poly[(D-lactide)-*co*-($\varepsilon$-caprolactone)]. In this case, the polymer blend preferably comprises or consists of 50 to 95 wt% of the copolymer (A) and 5 to 50 wt% of the stereocomplex forming agent (B).

Preferred polymer systems according to the present invention comprise: a blend comprising poly[(L-lactide)-*co*-($\varepsilon$-caprolactone)] and poly(D-lactide) (P(LLA-co-CL)/PDLA), a blend comprising poly[(D-lactide)-*co*-($\varepsilon$-caprolactone)] and poly(L-lactide) (P(DLA-co-CL)/PLLA), and a blend comprising poly[(L-lactide)-*co*-($\varepsilon$-caprolactone)] and poly[(D-lactide)-*co*-($\varepsilon$-caprolactone)] (P(LLA-co-CL)/P(DLA-co-CL)).

The polymer blend according to the present invention is at room temperature highly elastic or even hyperelastic. Moreover, the material shows a high degree of shape stability. The term shape stability indicates the degree of restauration of the initial shape after releasing the deformation force. The blend preferably has an elongation at break in the range of 400 to 1000% at 25 °C. The elongation at break can be determined by uniaxial tensile testing of thin films and/or electrospun mats. Further, the polymer blend according to the present invention may have an elastic modulus in the range of 25 to 150 MPa at 25 °C. The elastic modulus can be determined by uniaxial tensile testing of thin films and/or electrospun mats.

*Process of manufacturing an object from the polymer system*

Any kind of objects, including finished and semi-finished products and components, can easily manufactured by the polymer system (blend) by subjecting the blend to a thermoplastic molding process.

Accordingly, thermal and kinetic energy is supplied to the polymer system as to cause melting of the crystallites formed by the LLA/DLA stereocomplexes, followed by a molding process.

Preferably, extrusion, injection molding, spinning, electrospinning, hot pressing, or 3D-printing can be applied for manufacturing an object from the polymer system.

It is especially preferred that the molding process is directly combined with the method of preparing the polymer system. For example, when the polymer system is prepared in an extruder the object may be molded directly from the melted blend by extrusion.

Moreover, the polymer material of the invention can easily be re-molded by subjected the molded object to another thermoplastic molding process.

*Working Examples*

*Preparation of polymer system* P(LLA-co-CL)/PDLA

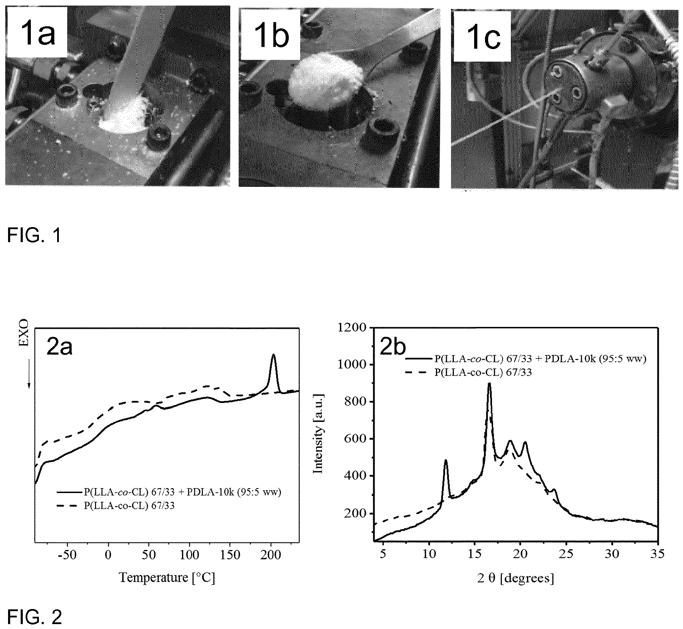

P(LLA-co-CL) 67:33 (mol%) having a molecular weight of $M_n \approx$ 80,000 g/mol and 5 wt% PDLA ($M_n \approx$ 10,000 g/mol) were processed to a blend in a twin-screw extruder (Prism Lab 16 mm, Thermo Scientific) equipped with a filament nozzle. First, the high molecular P(LLA-co-CL) was melted in the extruder at temperatures of 180 - 210 °C (Fig. 1a). Subsequently, PDLA was added to the melt during the extrusion (Fig. 1b). A monofilament having a diameter of ca. 4 mm was formed by extruding the blend through the filament nozzle (Fig. 1c). The polymer filament was allowed to cool and solidify at air and was subsequently granulated.

Analyses by differential scanning calorimetry (DSC) revealed that the granulate of the P(LLA-co-CL)/PDLA blend obtained in this way has a pronounced melting peak at a temperature of 204±1 °C (broken line in Fig. 2a). This peak can be attributed to the melting of the stereocomplex-crystallites, and is absent in the DSC plot of the copolymer P(LLA-co-CL) (continuous line in Fig. 2a). Further studies with wide-angle x-ray diffraction (WAXD) confirmed the presence of stereocomplex-crystallites by additional scattering peaks at $2\theta$ = 11,7; 20,7 and 23,8 in the blend (broken line in Fig. 2b).

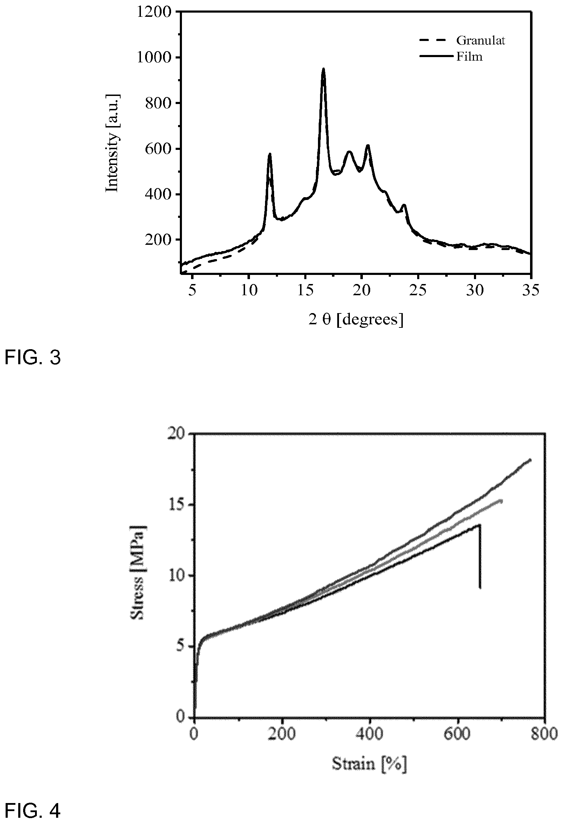

In the next step, the obtained blend granulate was processed to a film by hot pressing at a temperature of 210 °C. Figure 3 shows the WAXD-curve of the obtained film in comparison to the blend granulate. Both curves are almost identical, confirming that re-processing from the melt also leads to the spontaneous formation of stereocomplex-crystallites without requiring a thermal post-processing. Even at a processing temperature as low as about 180 °C, which is below the onset of the melting range of the stereocomplex-crystallites (cf. DSC Fig. 2a), the granulate can easily be processed to a film. Both films (obtained at 210 °C and 180 °C) showed nearly identical characteristics.

Next, the mechanical characteristics of the film produced at 210 °C was examined using rods (1BB) having broadened ends which had been punched from the film. At room temperature the P(LLA-co-CL)/PDLA films had an elongation at break ($\varepsilon_b$) of 700 ± 50% and elastic modulus (E) of about 62 MPa (cf. Fig. 4).

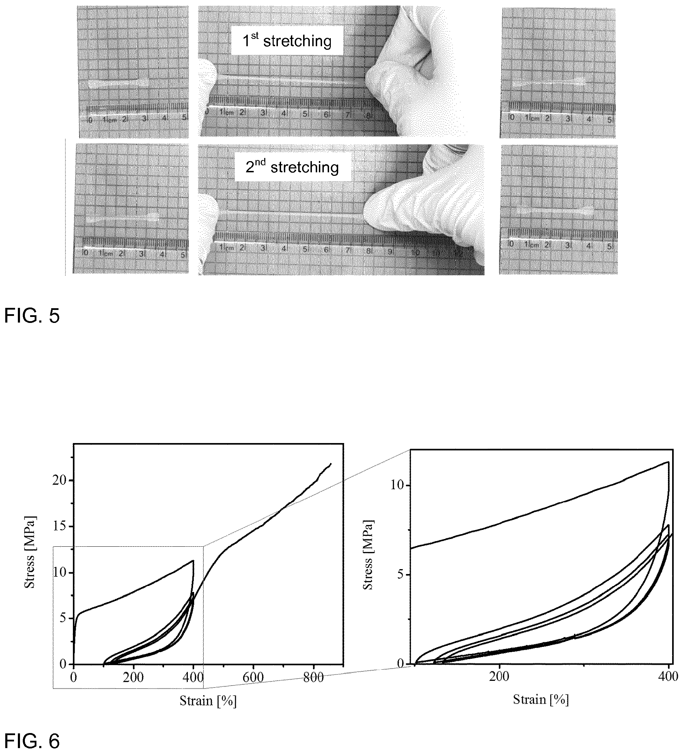

The hypereleastic behavior of the films is demonstrated in Figure 5. Here, a punched 1BB rod of P(LLA-co-CL)/PDLA was manually elongated to about the forth of its initial length (30 mm) and subsequently released. After the release the test rod spontaneously restored a length of 40 mm. Repeating the procedure with a test rod having been stretched once before, the new initial length of 40 mm is restored after the second elongation cyclus.

For the further quantification of the elastic behavior cyclic relaxation experiments were conducted in a tension test apparatus. Here an elongation of 400 % was applied. In the first relaxation cycle (cf. Fig. 6) a restoration rates of 75% was reached, and in the subsequent cycles restoration rates of 93% (2) and 96% (3). These results demonstrate the highly elastic behavior of the blend material.

## Claims

1. Method of preparing a non-covalently cross-linked polymer system comprising the steps of:

   preparing a melt of a copolymer based on a first comonomer and at least one second comonomer, the first comonomer being selected from L-lactide and D-lactide; and
   adding a lactide-containing stereocomplex forming agent to the melt, wherein the stereocomplex forming agent is selected such that the resulting polymer system comprises a combination of constitution units derived from L-lactide and constitution units derived from D-lactide forming stereocomplexes.

2. The method of claim 1, wherein the melt is substantially free of an organic solvent.

3. The method of any one of claims 1 or 2, wherein the melt is substantially free of any solvent.

4. The method of any one of claims 1 to 3, wherein the melt is prepared using a thermoplastic process, preferably in an extruder.

5. The method of any one of claims 1 to 4, wherein no thermal treatment or posttreatment is applied to achieve the formation of the stereocomplexes.

6. The method of any one of claims 1 to 5, wherein the copolymer has a partially blocky structure, preferably having a dyad ratio of (lactide-lactide) dyads to (lactide-second comonomer) dyads of at least 2.5:1 as determined by $^1$H-NMR.

7. The method of any one of claims 1 to 6, wherein the second comonomer is be selected from aliphatic cyclic esters, aliphatic cyclic di-esters, aliphatic cyclic ether esters, aliphatic cyclic amides, and cyclic morpholine-diones.

8. The method of any one of claims 1 to 7, wherein the copolymer is selected from poly[(L-lactide)-*co*-($\varepsilon$-caprolactone)] and poly[(D-lactide)-*co*-($\varepsilon$-caprolactone)].

9. The method of any one of claims 1 to 8, wherein the stereocomplex forming agent is selected from poly(L-lactide), poly(D-lactide), poly[(L-lactide)-*co*-($\varepsilon$-caprolactone)] and poly[(D-lactide)-*co*-($\varepsilon$-caprolactone)].

10. Non-covalently cross-linked polymer system, obtained or obtainable by the method according to any one of claims 1 to 9.

11. Process of manufacturing an object from the non-covalently cross-linked polymer system according to claim 10 by using a thermoplastic process.

12. The process of claim 11, wherein the thermoplastic process is selected from extrusion, injection molding, spinning, hot pressing, and 3D-printing.


**Patentansprüche**

1. Verfahren zur Herstellung eines nicht kovalent vernetzten Polymersystems, umfassend die folgenden Schritte:

   Herstellen einer Schmelze eines Copolymers, das auf einem ersten Comonomer und mindestens einem zweiten Comonomer basiert, wobei das erste Comonomer aus L-Lactid und D-Lactid ausgewählt ist; und
   Hinzugeben eines Lactid enthaltenden, Stereokomplex bildenden Agens zu der Schmelze, wobei das Stereokomplex bildende Agens derart ausgewählt ist, dass das resultierende Polymersystem eine Kombination von Struktureinheiten, abgeleitet von L-Lactid, und Struktureinheiten, abgeleitet von D-Lactid, unter Bildung von Stereokomplexen umfasst.

2. Verfahren nach Anspruch 1, wobei die Schmelze im Wesentlichen frei von einem organischen Lösungsmittel ist.

3. Verfahren nach einem der Ansprüche 1 oder 2, wobei die Schmelze im Wesentlichen frei von jeglichem Lösungsmittel ist.

4. Verfahren nach einem der Ansprüche 1 bis 3, wobei die Schmelze unter Verwendung eines Thermoplastverfahrens, vorzugsweise in einem Extruder, hergestellt wird.

5. Verfahren nach einem der Ansprüche 1 bis 4, wobei keine thermische Behandlung oder Nachbehandlung angewendet wird, um die Bildung der Stereokomplexe zu erreichen.

6. Verfahren nach einem der Ansprüche 1 bis 5, wobei das Copolymer eine teilweise blockartige Struktur aufweist, vorzugsweise mit einem Dyadenverhältnis von (Lactid-Lactid)-Dyaden zu (Lactid-zweites Comonomer)-Dyaden von mindestens 2,5:1, wie mittels $^1$H-NMR bestimmt.

7. Verfahren nach einem der Ansprüche 1 bis 6, wobei das zweite Comonomer ausgewählt ist aus aliphatischen cyclischen Estern, aliphatischen cyclischen Diestern, aliphatischen cyclischen Etherestern, aliphatischen cyclischen Amiden und cyclischen Morpholindionen.

8. Verfahren nach einem der Ansprüche 1 bis 7, wobei das Copolymer ausgewählt ist aus Poly[(L-Lactid)-*co*-($\varepsilon$-Caprolacton)] und Poly[(D-Lactid)-*co*-($\varepsilon$-Caprolacton)].

9. Verfahren nach einem der Ansprüche 1 bis 8, wobei das Stereokomplex bildende Agens ausgewählt ist aus Poly(L-Lactid), Poly(D-Lactid), Poly[(L-Lactid)-co-($\varepsilon$-Caprolacton)] und Poly[(D-Lactid)-*co*-($\varepsilon$-Caprolacton)].

10. Nicht kovalent vernetztes Polymersystem, erhalten oder erhältlich durch das Verfahren nach einem der Ansprüche 1 bis 9.

11. Verfahren zur Herstellung eines Objekts aus dem nicht kovalent vernetzten Polymersystem nach Anspruch 10 unter Verwendung eines Thermoplastverfahrens.

12. Verfahren nach Anspruch 11, wobei das Thermoplastverfahren ausgewählt ist aus Extrudieren, Spritzgießen, Spinnen, Heißpressen und 3D-Druck.


**Revendications**

1. Procédé de préparation d'un système polymère réticulé non covalent comprenant les étapes de :

   préparer une matière fondue d'un copolymère basé sur un premier comonomère et au moins un deuxième comonomère, le premier comonomère étant sélectionné parmi le groupe se composant de L-lactide et D-lactide ; et

ajouter à la matière fondue un agent formant des stéréocomplexes contenant du lactide, l'agent formant des stéréocomplexes étant sélectionné de telle sorte que le système polymère résultant comprend une combinaison d'unités de constitution dérivées du L-lactide et d'unités de constitution dérivées du D-lactide formant des stéréocomplexes.

2. Procédé selon la revendication 1, la matière fondue étant essentiellement exempte de solvant organique.

3. Procédé selon l'une quelconque des revendications 1 à 2, la matière fondue étant essentiellement exempte de tout solvant.

4. Procédé selon l'une quelconque des revendications 1 à 3, la matière fondue étant préparée en utilisant un procédé thermoplastique, de préférence dans une extrudeuse.

5. Procédé selon l'une quelconque des revendications 1 à 4, aucun traitement ou posttraitement thermique n'étant appliqué pour obtenir la formation des stéréocomplexes.

6. Procédé selon l'une quelconque des revendications 1 à 5, le copolymère ayant une structure partiellement séquencée, ayant de préférence un rapport dyadique entre dyades (lactide-lactide) et dyades (lactide-deuxième comonomère) d'au moins 2,5 : 1, tel que déterminé par $^1$H-NMR.

7. Procédé selon l'une quelconque des revendications 1 à 6, le deuxième comonomère étant sélectionné parmi le groupe se composant de : esters cycliques aliphatiques, diesters cycliques aliphatiques, éthersesters cycliques aliphatiques, amides cycliques aliphatiques et morpholines-diones cycliques.

8. Procédé selon l'une quelconque des revendications 1 à 7, le copolymère étant sélectionné parmi le groupe se composant de poly[(L-lactide)-*co*-($\varepsilon$-caprolactone)] et poly(D-lactide)-*co*-($\varepsilon$-caprolactone)].

9. Procédé selon l'une quelconque des revendications 1 à 8, l'agent formant des stéréocomplexes étant sélectionné parmi le groupe se composant de poly(L-lactide), poly(D-lactide), poly[(L-lactide)-*co*-($\varepsilon$-caprolactone)] et poly[(D-lactide)-*co*-($\varepsilon$-caprolactone)].

10. Système polymère réticulé non covalent, obtenu ou pouvant être obtenu par le procédé selon l'une quelconque des revendications 1 à 9.

11. Procédé de fabrication d'un objet à partir du système polymère réticulé non covalent selon la revendication 10 en utilisant un procédé thermoplastique.

12. Procédé selon la revendication 11, le procédé thermoplastique étant sélectionné parmi le groupe se composant de : extrusion, moulage par injection, filage, pressage à chaud et impression 3D.

FIG. 1

FIG. 2

FIG. 3

FIG. 4

FIG. 5

FIG. 6

**REFERENCES CITED IN THE DESCRIPTION**

**Patent documents cited in the description**

- US 2016130435 A1
- US 20170072089 A1

**Non-patent literature cited in the description**

- *ACS Sustainable Chem. Eng.,* 2016, vol. 4, 121-128
- *Journal of Polymer Science, part A: Polymer Chemistry,* 2015, vol. 53, 489-495
- *Journal of Polymer Science, part A: Polymer Chemistry,* 2005, vol. 43, 438-454